# EUROPÄISCHE PATENTSCHRIFT

(11) **EP 1 447 005 B1**
(45) Veröffentlichungstag und Bekanntmachung des Hinweises auf die Patenterteilung: **15.06.2016**
(21) Anmeldenummer: 04000466.5
(22) Anmeldetag: 13.01.2004
(51) Int. Cl.: A21C 5/02

(54) **Teigbearbeitungsanlage**
Dough processing installation
Installation de traitement de pâte

(30) Priorität: 15.02.2003 DE 10306437
(43) Veröffentlichungstag der Anmeldung: 18.08.2004
(73) Patentinhaber: Werner & Pfleiderer Lebensmitteltechnik GmbH, 91550 Dinkelsbühl (DE)
(72) Erfinder: Rothammel, Norbert, 91614 Mönchsroth (DE); Bodenstorfer, Ferdinand, 1160 Wien (AT); Meier, Alexander, 91602 Dürrwangen (DE)
(74) Vertreter: Hofmann, Matthias

(56) Entgegenhaltungen:
- EP-A2- 0 003 394
- EP-A2- 0 813 812
- WO-A-93/17560
- DE-A1- 2 315 977
- DE-A1- 2 706 703
- DE-A1- 2 719 709
- DE-A1- 3 911 521
- DE-A1- 19 640 176
- DE-A1- 19 858 169
- GB-A- 697 034

## Beschreibung

Die Erfindung betrifft eine Teigbearbeitungsanlage nach dem Oberbegriff der Ansprüche 1 und 2.

Aus der DE 198 58 169 A1 ist eine Vorrichtung zum Portionieren von Teig zu Teiglingen bekannt, wobei eine Teigportion durch maskenartige Auslassöffnungen zu Teiglingen gepresst wird.

Die WO 1993/017560 A1 offenbart eine Teigportioniervorrichtung, wobei eine Teigportion in dafür vorgesehenen Kammern mittels zweier Stempel portioniert und verdichtet wird.

Aus der DE 19 22 549 A1 ist eine Teigstanze bekannt, wobei Teig mittels eines Stanzteils ausgestanzt wird.

Eine derartige Teigbearbeitungsanlage ist durch offenkundige Vorbenutzung und aus DE 196 40 176 A1 bekannt. Dort wird die Kraft des Förderkolbens auf den Teig beim Portionieren mittels Federn oder mittels einer Hydraulik-Einrichtung begrenzt. Eine Begrenzung der Kolbenkraft ist deshalb erforderlich, weil die geförderte Teigmenge dem Volumen aller Portionierkammern entsprechen muss. Wenn alle Portionierkammern mit Teig gefüllt sind, muss die Bewegung des Förderkolbens gestoppt werden. Geschieht dies nicht rechtzeitig, so steigt der Druck im Teig an, was die Produktqualität negativ beeinflussen kann.

Es ist daher die Aufgabe der vorliegenden Erfindung, eine Teigbearbeitungsanlage der eingangs genannten Art derart weiterzubilden, dass beim Portionieren des Teigs der Druck im Teig nicht höher ansteigt, als es zur Füllung der Portionierkammern mit Teig erforderlich ist.

Diese Aufgabe ist erfindungsgemäß gelöst durch eine Teigbearbeitungsanlage mit den im Kennzeichnungsteil der Ansprüche 1 und 2 angegebenen Merkmalen.

Die Kraftmesseinrichtung stellt sicher, dass der Druck des Förderkolbens auf den Teig beim Portionieren von diesem überwacht werden kann. Auf diese Weise kann verhindert werden, dass Druckwerte erreicht werden, die zu einer Schädigung des Teigs führen können. Eine gute Produktqualität kann daher gewährleistet werden.

Eine Kraftmesseinrichtung mit mindestens einem Dehnungsmessstreifen lässt sich praktisch an beliebigen Orten der Kraftübertragung innerhalb der Antriebseinrichtung für den Förderkolben einsetzen. Zudem lassen sich mit Dehnungsmessstreifen Kräfte mit hinreichend guter Genauigkeit messen.

Eine Kraftmesseinrichtung, die als Messdose zwischen zwei Antriebsteilen der Antriebseinrichtung ausgeführt ist, führt zu einer kostengünstig realisierbaren Kraftmesseinrichtung. Derartige Messdosen sind in vielfältiger Ausführung bekannt.

Die Ausgestaltung der Kraftmesseinrichtung mit mindestens einem Dehnungsmessstreifen und die Ausgestaltung der Kraftmesseinrichtung, ausgeführt als Messdose zwischen zwei Antriebsteilen der Antriebseinrichtung, können auch in Kombination zum Einsatz kommen.

Eine Anordnung der Messdose nach Anspruch 3 führt zu einer Kraftmessung frei von äußeren Störeinflüssen.

Eine Steuereinrichtung nach Anspruch 4 führt zur Möglichkeit einer automatischen Ansteuerung des Förderkolbens, wobei sichergestellt ist, dass der voreingestellte Druck-Grenzwert nicht überschritten wird. Der Druck-Grenzwert kann zum Beispiel empirisch im Versuch ermittelt werden. Insbesondere kann mit großer Sicherheit vermieden werden, dass der Druck des Förderkolbens zu niedrig ist, um die Portionierkammern zu füllen. Gewichtsungenauigkeiten können dadurch vermieden werden.

Eine Steuereinrichtung nach Anspruch 5 führt zur Möglichkeit, die Bewegung des Förderkolbens auf die jeweils verwendete Teigrezeptur beziehungsweise auf die Größe der Portionierkammern einzustellen. Beim Umstellen der Teigbearbeitungsanlage von einer Teigrezeptur auf eine andere oder von einer Portionierkammergröße auf eine andere kann auf diese Weise die Förderkolbenbewegung schnell angepasst werden.

Ein Ausführungsbeispiel der Erfindung wird nachfolgend anhand der Zeichnung näher erläutert. In dieser zeigen:
- Fig. 1: einen Schnitt durch eine Teigbearbeitungsanlage als Momentaufnahme in einer Teig-Ansaug-Phase,
- Fig. 2 und 3: Momentaufnahmen der Teigbearbeitungsanlage in einer TeigFüll-Phase und in einer Teig-Ausstoß-Phase in einer zu Fig. 1 ähnlichen Darstellung, wobei dort eine Teig-Wirk-Vorrichtung sowie eine Teig-Abführ-Einrichtung sowie einige weitere Details der Teigbearbeitungsanlage gemäß Fig. 1 nicht dargestellt sind,
- Fig. 4: einen Längsschnitt durch die Teig-Wirk-Vorrichtung der Teigbearbeitungsanlage bei maximalem Abstand zwischen der Achse einer ersten Exenterwelle und einer Getriebewelle eines Wirkantriebsgetriebes,
- Fig. 5: eine erste Seitenansicht eines Wirkantriebsgetriebes der Teig-Wirk-Vorrichtung mit Blickrichtung auf die in Fig. 4 untenliegende Seite des Wirkantriebsgetriebes,
- Fig. 6: eine weitere Seitenansicht des Wirkantriebsgetriebes mit Blick auf eine in Fig. 4 obenliegende Seite des Wirkantriebgetriebes,
- Fig. 7: eine zur Fig. 4 ähnliche Darstellung der Teig-Wirk-Vorrichtung bei minimalem Abstand zwischen der Achse der ersten Exenterwelle und der Getriebewelle des Wirkantriebsgetriebes, und
- Fig. 8 und 9: zu den Fig. 5 und 6 ähnliche Ansichten der Teig-Wirk-Vorrichtung in der Stellung der Fig. 7.

Eine Teigbearbeitungsanlage 1 dient zum Portionieren und zum Wirken von Teig, zum Beispiel bei der Brötchenherstellung. Hierzu ist Teig in einen Zuführtrichter 2 eingefüllt. Eine bodenseitige Ausgangsöffnung 3 des Zuführtrichters 2 steht mit einem Förderraum 4 in Verbindung, in dem ein Förderkolben 5 horizontal läuft. Die horizontale Förderbewegung des Förderkolbens 5 wird durch einen Kurbeltrieb 6 angetrieben. Hierzu ist an einem dem Förderraum 4 abgewandten Ende des Förderkolbens 5 ein erster Hebelarm 7 angelenkt, der an seinem anderen Ende drehfest mit einer Schwenkwelle 8 verbunden ist. Ebenfalls drehfest mit der Schwenkwelle 8 verbunden ist ein zweiter Hebelarm 9, der an seinem anderen Ende an einem ersten Pleuelstangenabschnitt 10 einer Pleuelstange 11 angelenkt ist.
Über ein Verbindungsglied 12, in dem eine Kraftmessdose 13 angeordnet ist, ist der erste Pleuelstangenabschnitt 10 an einem zweiten Pleuelstangenabschnitt 14 angelenkt. Die Anordnung der Kraftmessdose 13 im Verbindungsglied 12 ist derart, dass mittels der Kraftmessdose 13 der Druck gemessen werden kann, den die beiden Pleuelstangenabschnitte 10, 14 bei der Förderbewegung des Förderkolbens 5 aufeinander ausüben. Über eine Signalleitung 15 steht die Kraftmessdose 13 mit einer Steuereinrichtung 16 in Verbindung. Die Steuereinrichtung 16 weist einen wiederbeschreibbaren Speicher 16 a auf.

Kraftmessdosen nach Art der Kraftmessdose 13 sind bekannt. Die Formänderung der Kraftmessdose 13 ist ein Maß für den auf diese einwirkenden Druck. Diese Formänderung kann kapazitiv, induktiv oder auch durch die Messung einer elektrischen Widerstandsänderung, zum Beispiel von Dehnungsmessstreifen, gemessen werden.

Die beiden Pleuelstangenabschnitte 10, 14 sowie das Verbindungsglied 12 mit der Kraftmessdose 13 sind in einem Pleuelstangengehäuse 17 geführt. Das vom Verbindungsglied 12 abgewandte Ende des zweiten Pleuelstangenabschnitts 14 ist an einer Kurbelwelle 18 angelenkt, die über eine Antriebskette 19 von einer Antriebswelle 20 eines Förderkolben-Antriebsmotors 21 angetrieben ist. Mit letzterem ist über eine Steuerleitung 22 die Steuereinrichtung 16 verbunden.

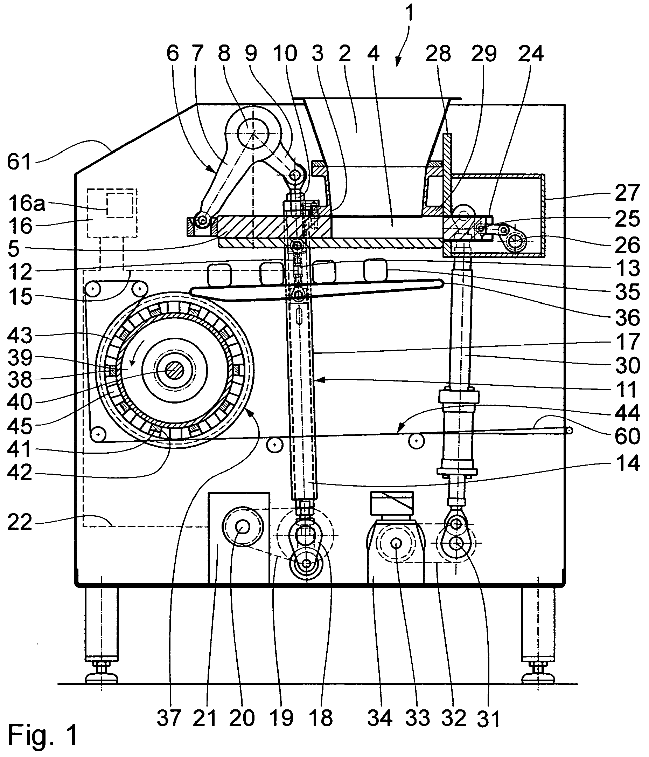

Im Förderraum 4 wird der Teig durch den in den Fig. 1 bis 3 nach rechts bewegten Förderkolben 5 gegen Portionierkammern 23 gedrückt, deren Mantelwände von Portionierzylindern 24 gebildet werden. Die Portionierkammern 23 setzen in den Fig. 1 bis 3 den Förderraum 4 nach rechts fort. Auf der vom Förderkolben 5 abgewandten Seite werden die Portionierkammern 23 durch Portionierkolben 25 begrenzt. Bei der Teigverarbeitungsanlage 1 sind senkrecht zur Zeichenebene der Fig. 1 bis 3 mehrere Portioniereinheiten mit jeweils einer Portionierkammer 23, einem Portionierzylinder 24 und einem Portionierkolben 25 hintereinander angeordnet. Zur Beschreibung der Teigbearbeitungsanlage reicht es aus, wenn nachfolgend eine einzelne derartige Portioniereinheit beschrieben wird, da die anderen Portioniereinheiten ebenso aufgebaut sind. Der Portionierkolben 25 ist an seinem vom Förderraum 4 abgewandten Ende an einer Portionier-Kurbelwelle 26 angeordnet, die in in den Fig. 1 bis 3 in nicht dargestellter Weise angetrieben ist. Über den Schwenkwinkel der Portionier-Kurbelwelle 26 ist ein Portionierhub der Portionierkolben 25 einstellbar, wodurch ein gewünschtes Volumen portionierter Teigstücke erreicht werden kann.

Die Portioniereinheiten sind in einem Flachschieberkasten 27 angeordnet, dessen vertikale Schieberwand 28 bündig an Stirnwandabschnitten eines den Förderraum 4 begrenzenden und den Förderkolben 5 führenden Tragabschnitts 29 der Teigbearbeitungsanlage 1 anliegt. Der Flachschieberkasten 27 ist längs der vertikalen Führung der Schieberwand 28 am Tragabschnitt 29 zur Portionierung des Teigs verschiebbar. Hierzu ist der Flachschieberkasten 27 an einer Flachschieberkasten-Pleuelstange 30 angelenkt, die an ihrem anderen Ende an einer Flachschieberkasten-Kurbelwelle 31 angelenkt ist. Letztere wird über eine Antriebskette 32 von einer Antriebswelle 33 eines Flachschieberkasten-Antriebsmotors 34 angetrieben.

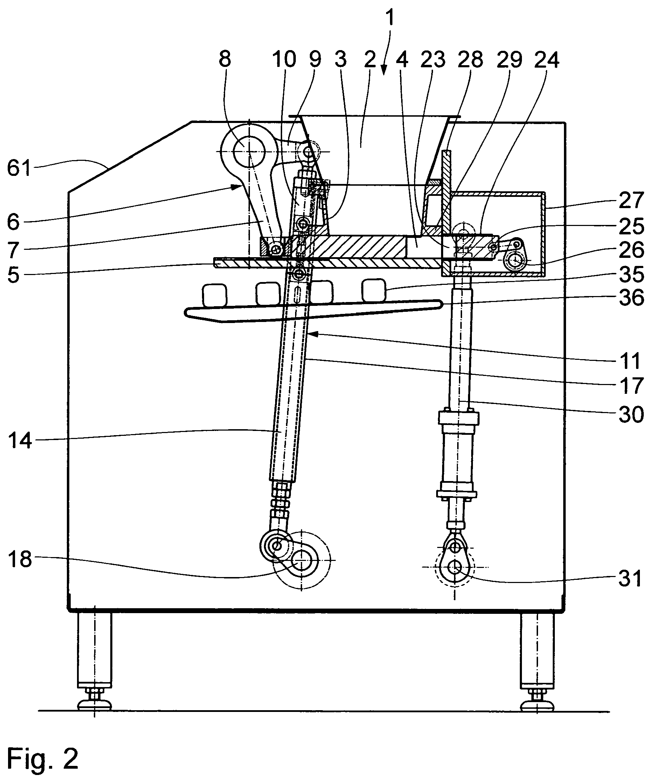

Fig. 1 bis 3 verdeutlichen das Portionieren von Teigstücken 35 mit der Teigbearbeitungsanlage 1. Fig. 1 zeigt dabei die Teigbearbeitungsanlage 1 in einer Teig-Ansaug-Phase, in der der Förderkolben 5 vollständig nach links zurückgezogen ist und in der die Portionierkolben 25 eine nach links verlagerte Stellung einnehmen, in welche ihre Kolbenwände bündig mit der dem Förderraum 4 zugewandten Fläche der Schieberwand 28 abschließen. Fig. 2 zeigt die Teigbearbeitungsanlage 1 während einer Teig-Füll-Phase, in welcher der angesaugte Teig durch Bewegen des Förderkolbens 5 nach rechts verdichtet und in Richtung der Portionierkammern 23 gedrückt wird. Hierbei werden die Portionierkolben 25 in den Portionierzylindern 24 um den über die Portionier-Kurbelwelle 26 vorgegebenen Portionierhub nach rechts verlagert, so dass in den Portionierkammern 23 ein gewünschtes Teigvolumen sich sammeln kann.

Der Druck, mit dem der Förderkolben 5 in der Teig-Füll-Phase auf den verdichteten Teig im Förderraum 4 und in den Portionierkammern 23 drückt, wird mittels der Kraftmessdose 13 gemessen und über die Signalleitung 15 an die Steuereinrichtung 16 übermittelt. Dort wird der gemessene Druck mit einem im Speicher 16a der Steuereinrichtung 16 abgelegten Grenzwert verglichen. Wenn der mit der Kraftmessdose 13 gemessene Druck den Druck-Grenzwert erreicht hat, ist das Eindrücken des Teigs in die Portionierkammern 23 durch den Förderkolben 5 abgeschlossen und dieser wird, zum Beispiel in der Stellung der Fig. 2, gesteuert von der Steuereinrichtung 16 über die Steuerleitung 22, angehalten. Der in der Steuereinrichtung 16 abgelegte Druck-Grenzwert ist insbesondere an die Teigrezeptur und auch an die Portionsgröße angepasst. Es ist klar, dass der Druck, den der Förderkolben 5 während der Teig-Füll-Phase auf den Teig ausübt, im Prinzip an jedem Kraftübertragungselement zwischen dem Förderkolben-Antriebsmotor 21 und dem Förderkolben 5 gemessen werden kann. Je nach in der Teigbearbeitungsanlage 1 bearbeiteter Teigrezeptur kann ein Druck-Grenzwert aus einer Mehrzahl von im Speicher 16a abgelegten Druck-Grenzwerten vom Benutzer ausgewählt werden.

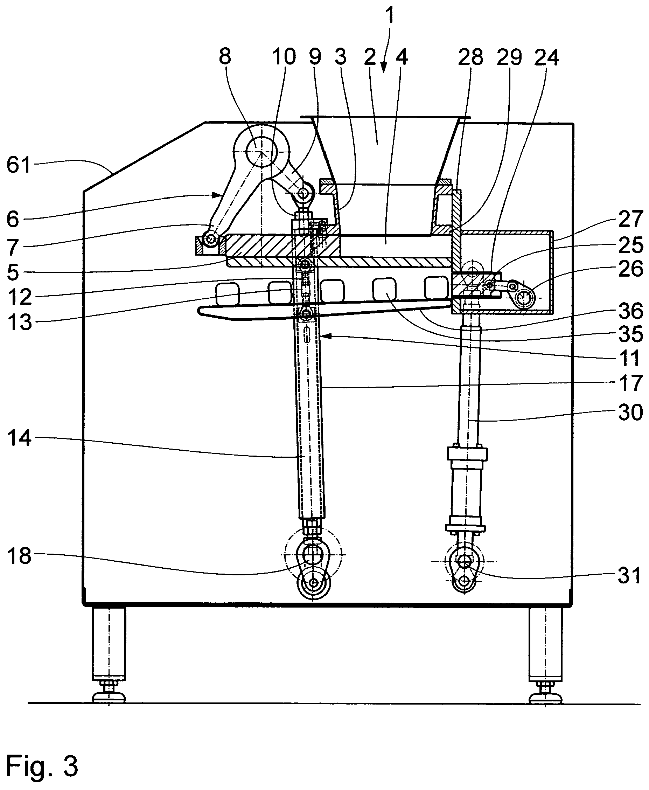

Nach der Teig-Füll-Phase wird der Flachschieberkasten 27 nach unten in die Stellung gemäß Fig. 3 verbracht, welche die Teigbearbeitungsanlage 1 in einer Teig-Ausstoß-Phase zeigt. Die Portionierkolben 25 werden nach Verlagerung des Flachschieberkastens 27 wieder in die in Fig. 3 dargestellte nach links verlagerte Stellung verbracht und stoßen somit Teigstücke 35 auf ein Übergabe-Transportband 36, welches als in nicht dargestellter Weise umgelenktes Endlos-Förderband ausgeführt ist, aus. Nach Durchlaufen der drei in den Fig. 1 bis 3 dargestellten Phasen liegt also auf dem Übergabe-Transportband 36 senkrecht zur Zeichenebene der Fig. 1 bis 3 eine Reihe von Teigstücken 35 vor, deren Anzahl der Anzahl der Portioniereinheiten entspricht. Diese Reihe von Teigstücken 35 wird dann auf dem Übergabe-Transportband 36 nach links in Richtung auf eine Teig-Wirkvorrichtung 37 zu transportiert.

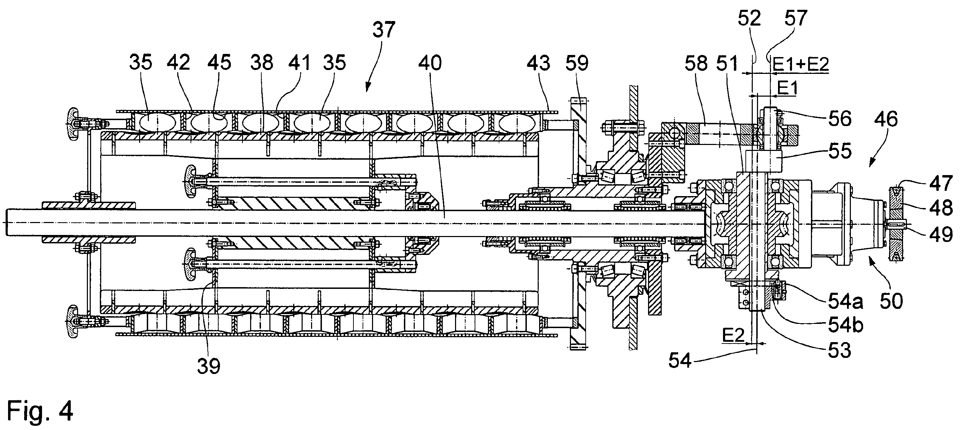

Die Teig-Wirkvorrichtung 37 wird nachfolgend unter zusätzlicher Bezugnahme auf die Fig. 4 bis 9 beschrieben. Sie weist eine innere hohlzylindrische Wirktrommel 38 auf, die über ein Traggestell 39 drehfest mit einer zentralen Wirktrommelwelle 40 verbunden ist. Koaxial um die innere Wirktrommel 38 ist eine auch als Kammertrommel bezeichnete, äußere hohlzylindrische Wirktrommel 41 angeordnet. Diese ist um die Wirktrommelwelle 40 relativ zur inneren Wirktrommel 38 drehbar an der Wirktrommelwelle 40 gelagert angeordnet. Die äußere Wirktrommel 41 weist in bekannter Weise Durchbrechungen 42 auf. Diese sind nach außen und nach innen offen und werden nach innen begrenzt durch die Außenwand der inneren Wirktrommel 38. In einem Umfangsabschnitt der äußeren Wirktrommel 41 werden die Durchbrechungen 42 nach außen begrenzt durch ein Wirktrum 43 eines Wirk/Förderbandes 44, welches in diesem Umfangsabschnitt an der äußeren Wirktrommel 41 anliegt. Die in diesem Umfangsabschnitt allseitig begrenzten Durchbrechungen 42 bilden Wirkzellen 45. Das Wirk/Förderband 44 ist als mehrfach umgelenktes Endlos-Förderband ausgeführt.

Die innere Wirktrommel 38 und die äußere Wirktrommel 41 führen zum Wirken des Teigs relativ zueinander eine Wirkbewegung durch, die von einem insgesamt mit dem Bezugszeichen 46 bezeichneten Wirkantrieb angetrieben ist. Hierzu wirkt ein nicht dargestellter Wirk-Antriebsmotor über einen Transmissionsriemen 47 auf eine Transmissionsscheibe 48, die drehfest mit einer ersten Übertragungswelle 49 verbunden ist. Letztere ist mit einer antriebsseitigen Welle eines Wirkantriebsgetriebes 50 verbunden.

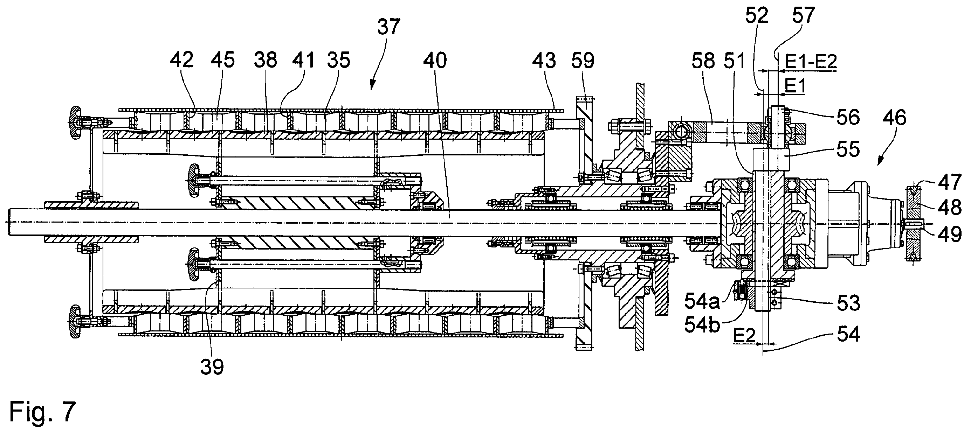

Dieses überträgt die Drehung der Übertragungswelle 49 zunächst in eine Drehung der hiermit fluchtenden Wirktrommelwelle 40, die somit eine erste Antriebskomponente darstellt, welche die innere Wirktrommel 38 um ihre Längsachse in Rotation versetzt. Ferner überträgt das Wirkantriebsgetriebe 50 die Drehung der Übertragungswelle 49 in eine Drehung einer Getriebewelle 51, die zwischen der Übertragungswelle 49 und der Wirktrommel-Welle 40 angeordnet ist und deren Rotationsachse 52 senkrecht zur Rotationsachse der Wirktrommelwelle 40 verläuft. In einer Bohrung der Getriebewelle 51 läuft eine Exzenterwelle 53, deren Rotationsachse 54 parallel zur Rotationsachse der Getriebewelle 51 verläuft und zu dieser einen Abstand hat, der in den Fig. 4 und 7 mit E₂ bezeichnet ist.

Die Exzenterwelle 53 ist relativ zur Getriebewelle 51 um ihre Rotationsachse 54 schwenkbar. Dieser Verschwenkweg wird begrenzt durch einen Anschlagskörper 54a, der drehfest mit der Exzenterwelle 53 verbunden ist und mit einem Gegenanschlagskörper 54b zusammenarbeitet, der als Stufe in einer dem Anschlagskörper 54a zugewandten Stirnwand der Getriebewelle 51 ausgeführt ist. Ein weiterer Gegenanschlagskörper 54c ist ebenfalls in der Stirnwand der Getriebewelle 51 ausgeführt. Die Exzenterwelle 53 steht über ein Exzenter-Verbindungsglied 55 mit einer weiteren Exzenterwelle 56 in Verbindung, deren Rotationsachse 57 parallel zu den Rotationsachsen 52 und 54 angeordnet ist. Der Abstand zwischen den Rotationsachsen 54, 57 der Exzenterwellen 53, 56 ist in Fig. 4 mit E₁ bezeichnet. Die Exzenterwelle 56 ist in Bezug auf die Getriebewelle 51 in der Stellung des Wirkantriebs 46 in den Fig. 4 bis 6 derart angeordnet, dass die Rotationsachse 52 der Getriebewelle 51 zur Rotationsachse 57 der Exzenterwelle 56 den Abstand E₁ + E₂ hat.

Die Exzenterwelle 56 ist über ein Kugelgelenk mit einem Übertragungsglied 58 verbunden. Letzteres steht über ein weiteres Übertragungsglied 59, welches drehbar um die Wirktrommelwelle 40 gelagert ist, mit der äußeren Wirktrommel 41 in Verbindung.

Die beiden Übertragungsglieder 58, 59 stellen eine zweite und eine dritte Antriebskomponente des Wirkantriebs 46 dar und haben folgende Funktion: Zum einen wird über die Übertragungsglieder 58, 59 die Drehbewegung der Übertragungswelle 59 in eine Drehbewegung der äußeren Wirktrommel 41 um die Wirktrommelwelle 40 übertragen. Die Drehbewegungen der beiden Wirktrommeln 38, 41 um die Wirktrommelwelle 40 sind dabei voneinander unabhängig. In diesem Sinne stellen die Übertragungsglieder 58, 59 eine zweite Antriebskomponente des Wirkantriebs 46 dar. Ferner übermitteln die Übertragungsglieder 58, 59 auch eine Bewegungskomponente der äußeren Wirktrommel 41 relativ zur inneren Wirktrommel 38 parallel zur Wirktrommelwelle 40, angetrieben durch die Drehung der Exzenterwelle 56 um die Getriebewelle 51. In diesem Sinne stellen die Übertragungsglieder 58, 59 eine dritte Antriebskomponente des Wirkantriebs 46 dar. Die Rotation der äußeren Wirktrommel 41 um die innere Wirktrommel 38 und die Bewegung der äußeren Wirktrommel 41 relativ zur inneren Wirktrommel 38 mit Bewegungskomponente parallel zur Längsachse der Wirktrommelwelle 40 sind so aufeinander abgestimmt, dass die Durchbrechungen 42 und insbesondere die Wirkzellen eine kreisförmige Bewegung relativ zur die Durchbrechungen 42 begrenzenden Wand der inneren Wirktrommel 38 und relativ zum Wirktrum 43 des Wirk-Förderbandes 44 vollführen. Die in den Wirkzellen befindlichen Teigstücke 35 werden auf diese Weise gewirkt, wodurch das vorher ungeformte Teigstück 35 in eine kugelige Form gebracht wird.

Ein relatives Verschwenken der beiden Exzenterwellen 53, 56 zueinander um 180° ist möglich. Eine zweite Relativstellung der beiden Exzenterwellen 53, 56 zueinander, bei der der Anschlagskörper 54a am Gegenanschlagskörper 54c anliegt, ist in Fig. 7 dargestellt. Dort subtrahieren sich die Abstände E₁ und E₂ voneinander, so dass die Rotationsachse 52 der Getriebewelle 51 und die Rotationsachse 57 der Exzenterwelle 56 zueinander einen Abstand von E₁ - E₂ aufweisen. Durch Verschwenken der Exzenterwellen 53, 56 zueinander zwischen den Stellungen der Fig. 4 und 7 wird demnach die Exzentrizität der Exzenterwelle 57 zur Getriebewelle 51 von der größerem Exzentrizität E₁ + E₂ auf die kleinere Exzentrizität E₁ - E₂ vermindert. Entsprechend verringert sich der Betrag der Bewegungskomponente der Relativbewegung der äußeren Wirktrommel 41 zur inneren Wirktrommel 38 parallel zur Längsachse der Wirktrommelwelle 40. Durch entsprechende Anpassung der Rotationsgeschwindigkeiten der inneren Wirktrommel 38 einerseits und der äußeren Wirktrommel 41 andererseits lässt sich auf diese Weise eine entsprechende Verkleinerung der kreisförmigen Wirkbewegung der äußeren Wirktrommel 41 zu inneren Wirktrommel 38 erzielen.

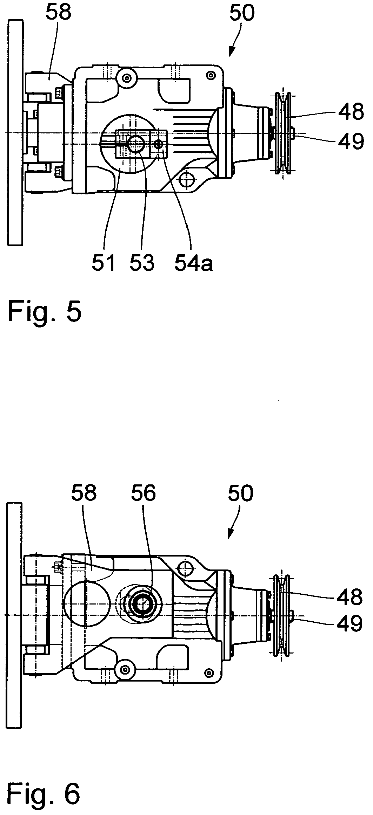

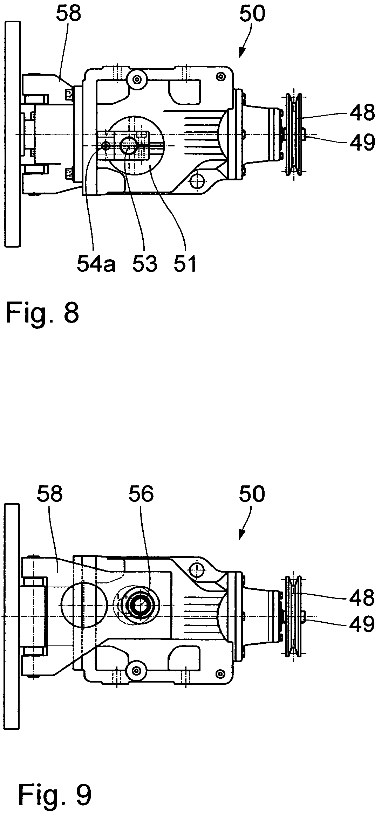

Die Teig-Wirkvorrichtung 37 funktioniert folgendermaßen:
Je nach dem Gewicht der Teigstücke 35 beziehungsweise deren Teigrezeptur wird der Drehsinn der Übertragungswelle 49 und der Unterschied in den Rotationsgeschwindigkeiten zwischen der inneren Wirktrommel 38 einerseits und der äußeren Wirktrommel 41 andererseits vorgegeben. Bei einem Antrieb der Getriebewelle 51 in Fig. 5 im Uhrzeigersinn wird spätestens nach einer halben Umdrehung die Stellung des Wirkantriebs 46 gemäß Fig. 4 erreicht. In dieser Stellung kann eine kreisförmige Wirkbewegung mit größerem Radius bereitgestellt werden. Soll eine Wirkbewegung mit kleinerem Radius bereitgestellt werden, so wird der Drehsinn der Drehung der Übertragungswelle 49 umgekehrt. In diesem Fall dreht sich auch die Getriebewelle 51 im umgekehrten Drehsinn, das heißt, in Fig. 8 entgegen dem Uhrzeigersinn. Der Wirkantrieb 46 nimmt dann spätestens nach einer halben Umdrehung die Position gemäß der Fig. 7 ein, bei der die kreisförmige Wirkbewegung mit kleinerem Radius bereitgestellt ist.

Nach erfolgtem Wirken verlassen die Teigstücke 35 die Wirkzellen und werden auf ein Fördertrum 60 des Wirk/Förderbandes 44 übergeben und verlassen ein Gehäuse 61 der Teigbearbeitungsanlage 1 durch eine entsprechende Ausgabeöffnung.

## Patentansprüche

1. Teigbearbeitungsanlage (1)
- mit einer Teig-Zuführeinrichtung (2),
- mit einer Teig-Portioniervorrichtung (5, 22 bis 27), die umfasst:
-- mindestens einen Förderkolben (5), der zugeführten Teig in mindestens eine Portionierkammer (23) drückt,
-- mindestens eine Antriebseinrichtung (6 bis 21) für den Förderkolben (5),
- mit einer Übergabeeinrichtung (36),
wobei mindestens eine Antriebskomponente (11) der Antriebseinrichtung (6 bis 21) für den Förderkolben (5) eine Kraftmesseinrichtung (13) aufweist, welche derart angeordnet ist, dass mit ihr die Kraft gemessen werden kann, welche der Förderkolben (5) beim Druck auf den Teig auf diesen ausübt,
**dadurch gekennzeichnet, dass**
die Kraftmesseinrichtung (13) mindestens einen Dehnungsmessstreifen umfasst,
eine Teig-Wirkvorrichtung (37) vorgesehen ist, wobei die Übergabeeinrichtung (36) eine Teigportion (35) von der Teig-Portioniervorrichtung (5, 23 bis 27) an die Teig-Wirkvorrichtung (37) übergibt, und
eine Teig-Abführeinrichtung (60) vorgesehen ist.

2. Teigbearbeitungsanlage (1)
- mit einer Teig-Zuführeinrichtung (2),
- mit einer Teig-Portioniervorrichtung (5, 22 bis 27), die umfasst:
-- mindestens einen Förderkolben (5), der zugeführten Teig in mindestens eine Portionierkammer (23) drückt,
-- mindestens eine Antriebseinrichtung (6 bis 21) für den Förderkolben (5),
- mit einer Teig-Wirkvorrichtung (37),
- mit einer Übergabeeinrichtung (36), die eine Teigportion (35) von der Teig-Portioniervorrichtung (5, 23 bis 27) an die Teig-Wirkvorrichtung (37) übergibt und
- mit einer Teig-Abführeinrichtung (60),
**dadurch gekennzeichnet, dass**
mindestens eine Antriebskomponente (11) der Antriebseinrichtung (6 bis 21) für den Förderkolben (5) eine Kraftmesseinrichtung (13) aufweist, welche derart angeordnet ist, dass mit ihr die Kraft gemessen werden kann, welche der Förderkolben (5) beim Druck auf den Teig auf diesen ausübt, wobei die Kraftmesseinrichtung (13) als Messdose zwischen zwei Antriebsteilen (10, 14) der Antriebseinrichtung (6 bis 21) ausgeführt ist.

3. Teigbearbeitungsanlage nach Anspruch 2, **dadurch gekennzeichnet, dass** die Kraftmesseinrichtung (13) in einem rohrförmigen Gehäuse (17) zwischen zwei Stangenabschnitten (10, 14) einer Antriebsstange (11), insbesondere einer Pleuelstange, angeordnet ist.

4. Teigbearbeitungsanlage nach einem der vorherigen Ansprüche, **gekennzeichnet durch** eine mit der Kraftmesseinrichtung (13) und der Antriebseinrichtung (6 bis 21) verbundene Steuereinrichtung (16), welche derart ausgeführt ist, dass beim Druck in die Portionierkammern (23) der Antrieb (21) des Förderkolbens (5) angehalten wird, sobald ein von der Kraftmesseinrichtung (13) gemessener Druck einen voreingestellten Druck-Grenzwert überschreitet.

5. Teigbearbeitungsanlage nach Anspruch 4, **dadurch gekennzeichnet, dass** die Steuereinrichtung (16) einen Datenspeicher (16a) für eine Mehrzahl von Kraft-Grenzwerten aufweist.

## Claims

1. A dough treatment facility (1), comprising
- a dough feeder (2),
- a dough metering arrangement (5, 22 to 27), which comprises
-- at least one delivery piston (5) which presses fed-in dough into at least one metering chamber (23),
-- at least one drive mechanism (6 to 21) for the delivery piston (5),
- a transfer arrangement (36),
wherein at least one drive component (11) of the drive mechanism (6 to 21) for the delivery piston (5) comprises a load sensing device (13) which is disposed for measuring the load by which the delivery piston (5), when pressing the dough, acts on the dough,
**characterized in that**
the load sensing device (13) comprises at least one wire strain gauge, a dough kneading arrangement (37) is provided, wherein the transfer arrangement (36) transfers a metered dough piece (35) from the dough metering arrangement (5, 23 to 27) to the dough kneading arrangement (37), and
a dough discharge arrangement (60) is provided.

2. A dough treatment facility (1), comprising
- a dough feeder (2),
- a dough metering arrangement (5, 22 to 27), which comprises
-- at least one delivery piston (5) which presses fed-in dough into at least one metering chamber (23),
-- at least one drive mechanism (6 to 21) for the delivery piston (5),
- dough kneading arrangement (37),
- a transfer arrangement (36) which transfers a metered dough piece (35) from the dough metering arrangement (5, 23 to 27) to the dough kneading arrangement (37), and
- a dough discharge arrangement (60),
**characterized in that**
at least one drive component (11) of the drive mechanism (6 to 21) for the delivery piston (5) comprises a load sensing device (13) which is disposed for measuring the load by which the delivery piston (5), when pressing the dough, acts on the dough, wherein the load sensing device (13) is a load cell arranged between two drive members (10, 14) of the drive mechanism (6 to 21).

3. A dough treatment facility according to claim 2, **characterized in that** the load sensing device (13) is disposed in a tubular casing (17) between two rod sections (10, 14) of a drive rod (11), in particular a connecting rod.

4. A dough treatment facility according to one of the preceding claims, **characterized by** a control unit (16), which is connected to the load sensing device (13) and to the drive mechanism (6 to 21) and which is designed such that the drive (21) of the delivery piston (5), when pressing into the metering chambers (23), is stopped as soon as a pressure that is sensed by the load sensing device (13) exceeds a pre-set pressure limit.

5. A dough treatment facility according to claim 4, **characterized in that** the control unit (16) comprises a data memory (16a) for a plurality of load limits.

## Revendications

1. Installation de traitement de pâte (1)
- comprenant un dispositif d'amenée de pâte (2),
- comprenant un dispositif de division de pâte en portions (5, 22 à 27), qui comporte :
-- au moins un piston de refoulement (5), qui presse la pâte amenée dans au moins une chambre de division en portions (23),
-- au moins un dispositif d'entraînement (6 à 21) pour le piston de refoulement (5),
- comprenant un dispositif de transfert (36),
au moins un composant d'entraînement (11) du dispositif d'entraînement (6 à 21) pour le piston de refoulement (5) comprenant un dispositif de mesure de force (13), lequel est agencé de telle manière qu'il peut mesurer la force que le piston de refoulement (5) exerce sur la pâte lorsqu'une pression est appliquée sur cette dernière,
**caractérisée en ce que**
le dispositif de mesure de force (13) comporte au moins une jauge de contrainte,
un dispositif de façonnage de pâte (37) est prévu, le dispositif de transfert (36) transférant une portion de pâte (35) du dispositif de division de pâte en portions (5, 23 à 27) au dispositif de façonnage de pâte (37), et
un dispositif d'évacuation de pâte (60) est prévu.

2. Installation de traitement de pâte (1)
- comprenant un dispositif d'amenée de pâte (2),
- comprenant un dispositif de division de pâte en portions (5, 22 à 27), qui comporte :
-- au moins un piston de refoulement (5), qui presse la pâte amenée dans au moins une chambre de division en portions (23),
-- au moins un dispositif d'entraînement (6 à 21) pour le piston de refoulement (5),
- comprenant un dispositif de façonnage de pâte (37),
- comprenant un dispositif de transfert (36) qui transfère une portion de pâte (35) du dispositif de division de pâte en portions (5, 23 à 27) au dispositif de fermentation de pâte (37) et
- comprenant un dispositif d'évacuation de pâte (60),
**caractérisée en ce que**
au moins un composant d'entraînement (11) du dispositif d'entraînement (6 à 21) pour le piston de refoulement (5) comprend un dispositif de mesure de force (13), lequel est agencé de telle manière qu'il peut mesurer la force que le piston de refoulement (5) exerce sur la pâte lorsqu'une pression est appliquée sur cette dernière, le dispositif de mesure de force (13) étant réalisé sous la forme d'un dynamomètre situé entre deux parties d'entraînement (10, 14) du dispositif d'entraînement (6 à 21).

3. Installation de traitement de pâte selon la revendication 2, **caractérisée en ce que** le dispositif de mesure de force (13) est agencé dans un boîtier tubulaire (17) entre deux sections (10, 14) de barre d'une barre d'entraînement (11), en particulier d'une bielle.

4. Installation de traitement de pâte selon l'une quelconque des revendications précédentes, **caractérisée par** un dispositif de commande (16) qui est relié au dispositif de mesure de force (13) et au dispositif d'entraînement (6 à 21) et qui est conçu de telle manière que, lorsqu'une pression est exercée dans les chambres de division en portions (23), l'entraînement (21) du piston de refoulement (5) est arrêté dès qu'une pression mesurée par le dispositif de mesure de force (13) dépasse une valeur seuil de pression préréglée.

5. Installation de traitement de pâte selon la revendication 4, **caractérisée en ce que** le dispositif de commande (16) comprend une mémoire de données (16a) pour une pluralité de valeurs seuils de force.
